**Europäisches Patentamt**

**European Patent Office**

**Office européen des brevets**

(19)

(11) Veröffentlichungsnummer : **0 085 189**
**B1**

(12)

# EUROPÄISCHE PATENTSCHRIFT

(45) Veröffentlichungstag der Patentschrift :
09.09.87

(51) Int. Cl.⁴ : **F 24 J 2/20**

(21) Anmeldenummer : **82112124.1**

(22) Anmeldetag : **30.12.82**

(54) **Dach-Wärmekollektor bzw. -Absorber.**

(30) Priorität : **08.01.82 DE 8200311 U**

(43) Veröffentlichungstag der Anmeldung :
**10.08.83 Patentblatt 83/32**

(45) Bekanntmachung des Hinweises auf die Patenterteilung : **09.09.87 Patentblatt 87/37**

(84) Benannte Vertragsstaaten :
**AT BE CH DE FR GB IT LI LU NL SE**

(56) Entgegenhaltungen :
**DE-A- 3 004 213**
**DE-U- 7 911 728**
**FR-A- 2 481 426**
**GB-A- 1 521 637**

(73) Patentinhaber : **Werner, Alfons**
**Dorfstrasse 26**
**D-8924 Steingaden-Urspring (DE)**

(72) Erfinder : **Werner, Alfons**
**Dorfstrasse 26**
**D-8924 Steingaden-Urspring (DE)**

(74) Vertreter : **Meizer, Wolfgang, Dipl.-Ing.**
**Patentanwälte Dipl.-Ing. H. Mitscherlich Dipl.-Ing. K.**
**Gunschmann Dipl.-Ing. Dr.rer.nat. W. Körber Dipl.-Ing.**
**J. Schmidt-Evers Dipl.-Ing. W. Meizer Steinsdorfs-**
**trasse 10**
**D-8000 München 22 (DE)**

## Beschreibung

Die Erfindung bezieht sich auf einen Dach-Wärmekollektor bzw. -Absorber nach dem Oberbegriff des Anspruchs 1.

Ein Dach-Wärmekollektor bzw. -Absober dieser Art ist in der FR-A-84 21 426 beschrieben und dargestellt.

Bei dieser bekannten Ausgestaltung ist die untere Abdeckung des Dach-Wärmekollektors bzw. -Absorbers an die Formgebung der oberen Abdeckung angepaßt, d. h., die untere Abdeckung ist in gleicher Weise verformt, wie die obere Abdeckung. Hierdurch wird die Herstellung des Dach-Wärmekollektors bzw. -Absorbers erheblich erschwert. Ein weiterer Nachteil dieser bekannten Ausgestaltung besteht darin, daß eine wesentliche Menge der im Dach-Wärmekollektor bzw. -Absorber aufgenommenen Wärme als Verlustwärme verloren geht, und zwar zur Unterseite des Dach-Wärmekollektors bzw. -Absorbers hin.

Obwohl in der FR-A-24 81 426 Halterungselemente zur Halterung des Dach-Wärmekollektors bzw. -Absorbers auf dem ihn tragenden Dach nicht offenbart sind, ist davon auszugehen, daß solche Halterungen vorhanden sind. Ferner ist der Dach-Wärmekollektor bzw. -Absorber in seinen Randbereichen entsprechend den Übergangsbereichen von einem Dachziegel zu den im Verbund benachbarten Dachziegeln in Übereinstimmung mit deren Form ausgebildet sind, so daß dieser bekannte Dach-Wärmekollektor bzw. -Absorber in einem Verbund mit Dachziegeln entsprechend seiner Verformung auf dem Dach verlegt werden kann.

In der DE-A-30 04 213 ist ein Dach-Wärmekollektor bzw. -Absorber beschrieben und dargestellt, dessen untere Abdeckung ebenfalls an die Formgebung der oberen Abdeckung angepaßt ist. Bei diesem bekannten Dach-Wärmekollektor bzw. -Absorber ist zwar eine unterseitige Isolierung in Form einer auf die den Dach-Wärmekollektor bzw. -Absorber tragende Dachlattung aufgelegten Kunststoffolie oder Schicht vorhanden, jedoch ist diese Isolierung unbefriedigend, weil es sich zum einen um ein besonderes Bauteil handelt, das auch gesondert zu verlegen ist, und zum anderen zwischen der Isolierung und der Unterseite des Dach-Wärmekollektor bzw. -Absorbers bei der Verlegung Hohlräume unvermeidbar sind, weshalb mit einem erheblichen Wärmeverlust durch Konvektion zu rechnen ist. Bei dieser bekannten Ausgestaltung ist eine Halterung für den Dach-Wärmekollektor bzw. -Absorber vorhanden und zwar in Form einer krallenförmigen Lasche, die sich an der Oberkante des Dach-Wärmekollektors bzw. -Absorbers befindet.

Der Erfindung liegt die Aufgabe zugrunde, einen Dach-Wärmekollektor bzw. -Absorber der eingangs bezeichneten Art so auszugestalten, daß bei Gewährleistung einer Verringerung des Wärmeverlustes zur Unterseite hin und einer sicheren Halterung auf der Dachlattung eine einfache und kostengünstig herstellbare Bauweise erreicht wird.

Diese Aufgabe wird durch die kennzeichnenden Merkmale des Anspruchs 1 gelöst.

Bei der erfindungsgemäßen Ausgestaltung ist die Wärmedämmung in die untere Abdeckung integriert, d. h., die Wärmedämmung wird erheblich verbessert, weil Hohlräume, in denen eine Konvektion entstehen kann, nicht vorhanden sind, und es bedarf im Gegensatz zur aus DE-A-30 04 213 bekannten Ausgestaltung keiner besonderen Wärmedämmelemente und auch keiner Zwischenlegung derselben, wodurch eine erhebliche Vereinfachung geschaffen wird. Außerdem wird auch eine Kondenswasserbildung vermieden. Die erfindungsgemäße Halterung in Form von an der Unterseite der unteren Abdeckung bzw. deren Wärmedämmung angeordneten Stegen ermöglicht eine sichere Auflage des Dach-Wärmekollektors bzw. -Absorbers entsprechend dem Rastermaß der Dachziegel. Die angestrebte einfache Bauweise ergibt sich dadurch, daß zum einen die untere Abdeckung eben ausgebildet ist und zum anderen die Wärmedämmung auf die ebene untere Abdeckung aufgebracht ist. Die untere Abdeckung kann somit in einem Arbeitszyklus komplett fertiggestellt und mit der oberen Abdeckung verbunden werden, wobei die Anbringung der Wärmedämmung an der unteren Abdeckung aufgrund deren ebener Erstreckung leicht und einfach durchzuführen ist. Ferner wird eine ruhige Strömung des Wärmeleitmediums ermöglicht, weil dieses durch Vermeidung von Stufen an der unteren ebenen Abdeckung entlang zu strömen vermag.

Es ist zwar aus DE-U-79 11 728 an sich bekannt, die Unterseite der Kollekteräume eines Dach-Wärmekollektors in ebener Form auszugestalten, jedoch liegt bei dieser bekannten Ausgestaltung diese nicht auf der Dachlattung auf, sondern sie taucht zwischen die Dachlattung ein, so daß im Bereich des Dach-Wärmekollektors Dachlatten zu entfernen sind. Abgesehen von den sich dadurch ergebenden statischen Problemen ist hierdurch die Einsetzbarkeit dieses Dach-Wärmekollektors erheblich eingeschränkt, z. B. im Ortgangbereich des Daches.

Vorteilhafte Weiterbildungen der Erfindung sind in den Unteransprüchen beschrieben.

Bei dem erfindungsgemäßen Dach-Kollektor bzw. Absorber ist es zumindest auf den ersten Blick nicht erkennbar, ob Dachziegel im Verbund verlegt oder ein Flachkollektor verlegt ist. Trotz der Dachziegelform wird ein großflächiger Flachkollektor erreicht. Weiter können die einzelnen Kollektoren nebeneinander angeordnet werden, wobei weiter der äußere Eindruck eines Dachziegelverbandes aufrechterhalten bleibt. Somit ist eine Anpassung an jede Dachgröße möglich. Durch den einfachen Aufbau ist der erfindungsgemäße Kollektor auch ohne konstruktive Änderungen bei bestehenden Dachkonstruktionen anwendbar. Es ist lediglich eine Verlegung von Zufuhr- und Abfuhrleitungen erforderlich, wobei deren Anzahl gering ist, weshalb die Verlegung übersichtlich und platzsparend erfolgen kann.

Die Erfindung wird anhand des in der Zeichnung dargestellten Ausführungsbeispiels näher erläutert. Es zeigen :

Figur 1 in Aufsicht einen erfindungsgemäßen Dach-Wärmekollektor bzw. -Absorber,

Figur 2 den Schnitt II-II in Fig. 1,

Figur 3 den Schnitt III-III in Fig. 1 bei Verlegung auf einem Dach.

Der dargestellte erfindungsgemäße Dach-Wärmekollektor bzw. -Absorber ist dem Äußeren nach als Verband von 3×4 Frankfurter Pfannen ausgebildet. Insbesondere die obere Abdeckung 2 ist entsprechend dem äußeren Aussehen des erwähnten Verbandes der Dachziegel verformt und ist daher von außen nicht oder kaum von einem derartigen Verband unterscheidbar.

Weiter weist der Kollektor 1 eine untere Abdeckung 3 auf, die im wesentlichen glatt ausgebildet ist und mit einer Wärmedämmung 4 versehen ist. Die Wärmedämmung erreicht, daß kein Kondensat an der Absorberunterseite auftreten kann.

Der Kollektor 1 weist im Bereich einer Ecke einen Rohrstutzen 5 als Zufuhranschluß und an der anderen Ecke einen Rohrstutzen 6 als Abfuhranschluß für ein Wärmeleitmedium auf, wobei die Rohrstutzen 5, 6 die untere Abdeckung 3 und die Wärmedämmung 4 durchsetzen. Über den einen Rohrstutzen 5 wird das Wärmeleitmedium zugeführt, beispielsweise zugepumpt, strömt durch den Zwischenraum zwischen den beiden Abdeckungen 2, 3, wird dort über die einfallende und durch die obere Abdeckung 2 tretende Sonnen- bzw. Wärmestrahlung erwärmt und verläßt den Kollektor 1 durch den anderen Rohrstutzen 6. Das erwärmte Wärmeleitmedium, wie ein Sole-Wassergemisch oder dergleichen, wird dann in an sich bekannter Weise einer Wärmepumpenanlage oder einer anderen Heizeinrichtung zur Ausnutzung der aufgenommenen Wärmeenergie zugeführt. Selbstverständlich und wie meist üblich, kann das Wärmeleitmedium auch durch den Rohrstutzen 6 zugeführt und durch den Rohrstutzen 5 wieder abgeführt werden. Wesentlich dabei ist, daß während der Verweilzeit im Zwischenraum zwischen den beiden Abdeckungen 2, 3 von dem Wärmeleitmedium Wärmeenergie aufgrund von direkter oder diffuser Sonnenstrahlung oder aus der Umgebungsluft aufgenommen, d. h. absorbiert werden kann. Da dies an sich bekannt ist, erscheint eine nähere Erläuterung nicht erforderlich.

Weiter ist wesenentlich, daß bei dem erfindungsgemäßen Dach-Wärmekollektor bzw. Absorber 1 dessen Randbereiche den entsprechenden Übergangsbereichen der jeweiligen Dachziegelart angepaßt sind. Wie bei dem Ausführungsbeispiel dargestellt, das dem Verband von Frankfurter Pfannen entspricht, weist der untere Randbereich 9 den Verlauf auf, den üblicherweise Frankfurter Pfannen besitzen. Der (bei Verlegung) untere Rand 9 überlappt dabei den oberen Rand üblicher Dachziegel oder den entsprechend ausgebildeten oberen Rand 10 eines benachbarten Dach-Kollektors oder Absorbers 1, der seinerseits in entsprechender Weise ausgebildet ist. In gleicher Weise sind der linke und der rechte Rand 11 bzw. 12 entsprechend dem entsprechenden Verlauf der jeweiligen Dachziegelart, hier der Frankfurter Pfanne, ausgebildet. Insbesondere sind die jeweiligen Randbereiche 9 bis 12 zweckmäßigerweise ohne Zwischenraum ausgebildet und können auch Verbindungsbereiche zwischen oberer und unterer Abdeckung 2, 3 bilden.

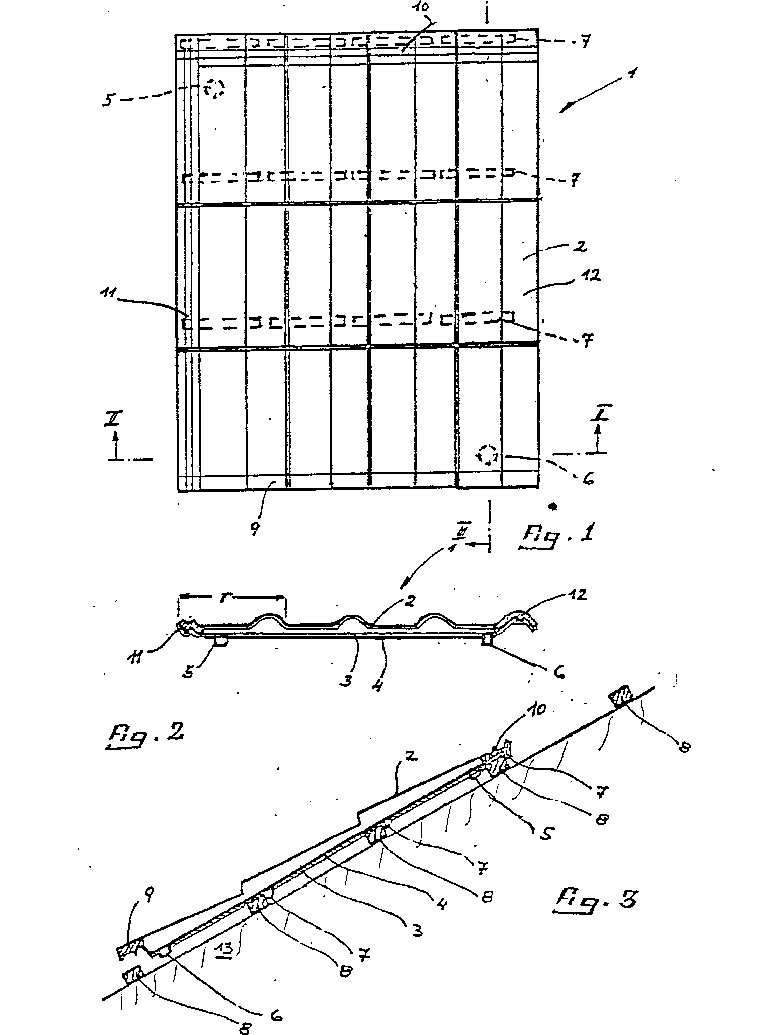

Entsprechend dem Rastermaß der verwendeten Dachziegelart weist die untere Abdeckung 3 bzw. deren Wärmedämmung 4 nach unten vorspringende Nasen oder Stege 7 auf, mittels denen der Dach-Kollektor bzw. Absorber 1 entsprechend der jeweiligen Dachziegelart an der Dachlattung 8 verlegt werden kann. Wie in Fig. 3 dargestellt, wird eine übliche Dachlattung 8 verwendet, die quer auf beispielsweise Dachstuhlbalken 13 aufgenagelt ist.

Der erfindungsgemäße Dach-Kollektor bzw. Absorber 1 ist vorteilhaft aus Kunststoff herstellbar. Dabei können obere und untere Abdeckung 2 bzw. 3 einschließlich der Wärmedämmung 4 für letztere getrennt hergestellt werden und dann entsprechend dem Aussehen der verschiedenen Randbereiche 9 bis 12 miteinander verbunden werden. Andererseits ist es auch möglich, obere und untere Abdeckung 2, 3 einstückig herzustellen. Dazu sind Formen verwendbar, deren Zwischenraum mit einem Stoff ausgefüllt ist, der bei Erwärmung ausgetrieben werden kann. Derartige Formverfahren sind an sich bekannt. Die Wärmedämmung 4 wird anschließend auf die im wesentlichen glatte untere Abdeckung 3 aufgebracht. Die Nasen oder Stege 7 können beim Formen aufgebracht werden, können aber auch nachträglich befestigt werden, wie mittels Kleben oder dergleichen. Wesentlich ist also, daß der erfindungsgemäße Dach-Kollektor oder Absorber 1 durch seine an den Dachziegelverband angepaßte Größe anstelle von Dachziegeln eingesetzt werden kann, wobei je nach Bedarf eine Aneinanderreihung mehrerer Dach-Kollektoren bzw. Absorber 1 möglich ist. Die Verrohrung, d. h. der Anschluß der Zufuhr- und Abfuhrleitungen für das Wärmeleitmedium kann dabei innerhalb oder außerhalb einer Unterlattung vorgesehen sein.

Der erfindungsgemäße Dach-Kollektor bzw. Absorber 1 besitzt daher nach außen die erwünschte Dachziegelform und ist trotzdem großflächig. Die Dacheindeckung ist daher durchlaufend gleichförmig und ist optisch nicht störend, weshalb das Genehmigungsverfahren zumindest vereinfacht ist, wenn es nicht ganz entfällt. Der erfindungsgemäße Dach-Kollektor bzw. Absorber 1 kann weiter auch bei bestehenden Dächern eingesetzt werden. Es sind lediglich übliche Dachziegel in notwendiger Anzahl zu entfernen und ist der mindestens eine erfindungsgemäße Dach-Kollektor bzw. Absorber einzusetzen, wonach dann die Verrohrung erfolgt. In besonderer Weise ausgebildete Fachkräfte sind hierzu nicht erforderlich.

Es sei erwähnt, daß der Zwischenraum zwischen den beiden Abdeckungen 2 und 3 in an sich üblicher Weise mit Schikanen und Abstützungen versehen sein kann, um einen möglichst optimalen Wärmeübergang auf das Wärmeleitmedium zu erreichen.

Es ergibt sich weiter, daß die Erfindung nicht nur auf Frankfurter Pfannen anwendbar ist, obwohl sich für diese Dachziegelart aufgrund deren rechteckiger Form Vorteile ergeben. Die Erfindung ist auch auf Verbände von anderen Dachziegelarten, wie für sogenannten Biberschwanz-, Mönch-und-Nonne-Verbände usw. grundsätzlich anwendbar. Es muß lediglich darauf geachtet werden, daß die äußeren Abmessungen und der Verlauf der Ränder in entsprechender Weise an den jeweiligen Verband angepaßt ausgebildet sind.

## Patentansprüche

1. Dach-Wärmekollektor bzw. -Absorber für ein ziegelgedecktes Dach für insbesondere Wärmepumpenanlagen und dgl., der die Fläche mehrerer Dachziegel überdeckt und am Dach eines Gebäudes entsprechend der Dachneigung gehaltert werden kann, mit einer dachaußenseitigen licht- und/oder wärmestrahlungsdurchlässigen oberen Abdeckung (2), die entsprechend dem äußeren Aussehen mehrerer im Verband verlegter Dachziegel verformt ist, mit einer dachinnenseitigen lichtundurchlässigen unteren Abdeckung (3), die mit der oberen Abdeckung (2) randseitig dicht verbunden ist, wobei die Randbereiche (9-12) entsprechend den Übergangsbereichen von einem Dachziegel zu den im Verbund benachbarten Dachziegeln in Übereinstimmung mit der Verformung ausgebildet sind, mit einem Strömungsbereich zwischen den Abdeckungen (2, 3) für ein Wärmeleitmedium und mit einem Zufuhr- und einem Abfuhranschluß für das Wärmeleitmedium, dadurch gekennzeichnet, daß nur die obere Abdeckung (2) das dem Verband verlegter Dachziegel optisch entsprechende Aussehen besitzt, daß die untere Abdeckung (3) eben ausgebildet und mit einer aufgebrachten Wärmedämmung (4) versehen ist, und daß an der Unterseite der unteren Abdeckung (3) bzw. deren Wärmedämmung (4) zur Halterung Stege (7) so angeordnet sind, daß der Dach-Wärme, kollektor bzw. Absorber (1) entsprechend dem Rastermaß an Stelle der Dachziegel auf die Dachlattung (8) auflegbar ist.

2. Dach-Wärmekollektor bzw. -Absorber nach Anspruch 1, gekennzeichnet durch eine Fläche von etwa 1 bis 1,5 m².

3. Dach-Wärmekollektor bzw. -Absorber nach Anspruch 1 oder 2, dadurch gekennzeichnet, daß als Dachziegelform die der « Frankfurter Pfanne » verwendet ist.

4. Dach-Wärmekollektor bzw. -Absorber nach Anspruch 3, gekennzeichnet durch eine Fläche von 3 mal 4 Frankfurter Pfannen.

5. Dach-Wärmekollektor bzw. -Absorber nach einem der Ansprüche 1 bis 4, dadurch gekennzeichnet, daß zumindest die obere und die untere Abdeckung (2, 3) aus Kunststoff bestehen.

## Claims

1. A roof heat collector or absorber for a tiled roof, particularly for heat pump installations or the like, that extends over the area of several roof tiles and can be mounted on the roof of a building according to the pitch of the roof, having on its outer side (relative to the roof) an upper covering (2) that transmits light and/or heat radiation and is shaped to correspond to the external appearance of an assembly of several roof tiles, having on its inner side (relative to the roof) a lower covering (3), opaque to light, that is sealed to the upper covering (2) at the edges, the edge regions (9-12) being constructed to correspond to the transition regions from one roof tile to the adjacent tiles in the arrangement, in conformity with the contour, having a flow region for a heat-transfer medium between the coverings (2-3), and having an inlet and an outlet connection for the heat-transfer medium, characterised in that only the upper covering (2) has the appearance that corresponds optically to the assembly of roof tiles, the lower covering (3) is flat and has heat insulation (4) applied to it, and that cross-pieces (7) for mounting are arranged on the underside of the lower covering (3) or of its heat insulation (4) so that the roof heat collector or absorber (1) corresponding to the size of the grid can be put in position on the roof lathes (8) in place of the roof tiles.

2. A roof heat collector or absorber according to claim 1, characterised by an area of about 1 to 1.5 m².

3. A roof heat collector of absorber according to claim 1 or claim 2, characterised in that the roof tiles are of the « Frankfurt pantile » shape.

4. A roof heat collector or absorber according to claim 3, characterised by an area of 3×4 Frankfurt pantiles.

5. A roof heat collector or absorber according to one of claims 1 to 4, characterised in that at least the upper and lower coatings (2, 3) consist of plastic material.

## Revendications

1. Capteur ou absorbeur thermique pour toit couvert de tuiles, en particulier pour installations à pompe à chaleur et analogues, qui couvre la surface de plusieurs tuiles et peut être fixé au toit d'un bâtiment en fonction de la pente de celui-ci, comportant une couverture supérieure côté extérieur du toit (2) laissant passer la lumière et/ou le rayonnement thermique et ayant une forme correspondant à l'aspect de plusieurs tuiles posées en assemblage, une couverture inférieure côté intérieur du toit (3) opaque qui est, sur son bord, jointe de manière étanche à la couverture supérieure (2), les zones de bord (9 à 12) ayant une forme correspondant à celle des zones de jonction d'une tuile aux tuiles de l'assemblage voisines, une zone d'écoulement d'un fluide caloporteur située entre les couvertures (2, 3), et un raccord d'arrivée et un raccord de départ du fluide caloporteur, caractérisé en ce que seule la couverture supérieure (2) a l'aspect de l'assemblage de tuiles posées, que la couverture inférieure (3) est plane et qu'une isolation thermique (4) est appliquée sur elle, et que des nervures de fixation (7) sont placées sur le dessous de la couverture inférieure (3) ou de son isolation thermique (4) de façon que le capteur ou absorbeur thermique de toit (1) puisse être posé sur le lattis (8) du toit suivant le module à la place des tuiles.

2. Capteur ou absorbeur thermique de toit selon la revendication 1, caractérisé par une surface d'environ 1,0 à 1,5 m².

3. Capteur ou absorbeur thermique de toit selon l'une des revendications 1 ou 2, caractérisé en ce qu'il est utilisé, comme forme de tuile, celle de la « panne de Francfort ».

4. Capteur ou absorbeur thermique de toit selon la revendication 3, caractérisé par une surface de trois fois quatre pannes de Francfort.

5. Capteur ou absorbeur thermique de toit selon l'une des revendications 1 à 4, caractérisé par le fait qu'au moins la couverture supérieure et la couverture inférieure (2, 3) sont en matière plastique.

Fig.1

Fig.2

Fig.3